# EUROPEAN PATENT APPLICATION

(11) **EP 1 172 750 A2**
(43) Date of publication of application: **16.01.2002**
(21) Application number: 01305466.3
(22) Date of filing: 22.06.2001
(51) Int. Cl.: G06F 17/60

(54) **Direct electronic business transaction**

(30) Priority: 06.07.2000 US 612407
(71) Applicant: ALPS ELECTRIC CO., LTD., Ota-ku Tokyo 145 (JP); Alps Electric (North America), Inc., San Jose, California 95138 (US)
(72) Inventor: Umehara, Junichi, Ota-ku, Tokyo 145 (JP)
(74) Representative: Kensett, John Hinton

(57) **Abstract**

A method and system for issuing and printing original electronic certificates or documents directly by service providers on a user's printer, where the printer may not be connected to the user's computer. The electronic certificates may include financial certificates, such as a certificate of deposit and stock certificate, ticket, stamp, payment receipt, and new activated credit card. The service provider is provided with ability to directly check sufficiency of the user's printer supplies, and replenish the printer with needed supplies.

## Description

### FIELD OF THE INVENTION

This invention relates to conducting electronic business transactions including issuing and printing electronic certificates directly by product/service providers. The transactions possible with the present invention, therefore, may include purchasing consumer goods, such as stamps, identification cards, music, film, artwork, logos, labels, overnight postage delivery labels and pickup schedules, tickets for entertainment events, such as games, movies, theater, and for transportation, such as airline, trains, cruise lines, and buses.

### BACKGROUND OF THE INVENTION

With the advent and popularity of the Internet, it has become increasingly popular for consumers and product/service providers to conduct transactions electronically. For example, a consumer may communicate to the Web site of a ticket broker and order tickets for concerts, movies, etc. The consumer may pay for the purchased tickets by authorizing the ticket broker to charge a credit card account for the purchase price. Thus, in this arrangement, the ordering and payment steps of the transaction are easily accomplished electronically. Delivery of the purchased goods, however, is usually implemented by mailing the goods to the consumer resulting in an indescribable delay in fully completing the transaction. There are many transactions, however, which could be completed entirely via electronic transfer of data where the goods sold are in printed form or where a printed certificate is used for future services i.e. airline tickets. To date, however, such transactions have not been possible or are very limited because no acceptable arrangement exists for delivering the end goods or certificates.

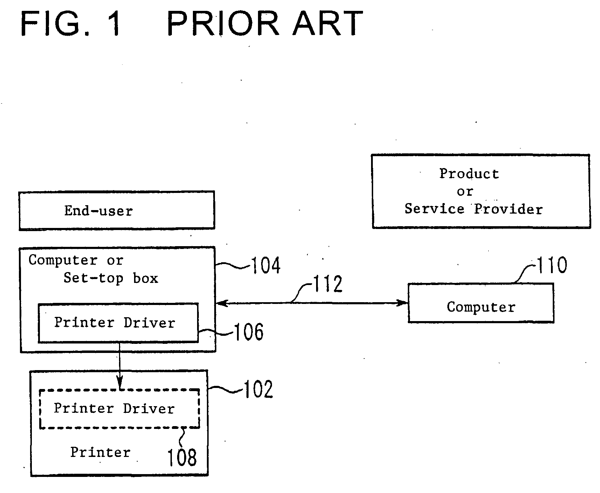

Figure 1 shows a traditional arrangement for electronic business transactions between an end-user and a product/service provider. In such a traditional arrangement, a user's printer 102 is connected to the user's computer system, television, or set-up box 104, normally via a dedicated printer cable. The user's printer is under the control and command of the user's computer for printing materials that are downloaded to the end-user's printer 102 from the user's computer system 104 via the printer cable (not shown). The printer driver 108 residing in the user's printer 102 and the printer deriver 106 residing in the user's computer system 104 communicate directly with each other to perform a print job. In this traditional arrangement, the user's printer 102 does not directly communicate with an online product/service provider, such as an airline company, computer system 110. Moreover, printing usually requires the end-user's involvement. As a result, the materials form the product/service provider to be printed on the end-user's printer 102 have to be downloaded first to the end-user's computer system 104, via the communication channel 112, and then downloaded, by the end-user from the user's computer 104, to the end-user's printer 102. This process has several disadvantages.

First, the end-user needs to be involved and use his or her computer system 104 to receive materials to be printed from the product/service provider and then actively send the materials to the end-user's printer 102. These materials may include authorized certificates that have to be printed unaltered and in its original form. Thus, this process has less security than printing the materials directly received from the product/service provider without the user's involvement. Second, if the user's computer system 104 is malfunctioning, turned off, or the user fails to otherwise properly maintain his or her computer, nothing may be printed.

In addition, in the conventional arrangement, as shown in Figure 1, the end-user also has to diligently check that his or her printer has sufficient supplies, such as paper, cartridge, ribbon, and ink, before sending a print job to the printer. This problem intensifies when the end-user wishes to print an original document with complicated graphics and special effects. In the event the end-user's printer lacks sufficient supplies or capability, the end-user has to personally provide the supplies or upgrades, a process which requires identifying a proper commercial supplier, ordering the supplies or purchasing them directly from a proper local printer supply store, if any is available in the end-user's area. This process may render the printer inoperative for printing the desired documents for a considerable period of time.

Although some systems have been proposed wherein a product/server provider communicates printing data directly to the end-user's computer, these systems have limited printing capabilities. For example, U.S. Patent No. 5,319,562 discloses a system wherein the end-user computer system includes a end user's printer and a postage printing program for directing the end-user's printer to print address and postage on envelopes and labels. In this system, however, the end user has to have a postage printing program and a postage meter to keep track of postage purchased by the end-user and the postage applied to mail pieces by the end-user's printer. Moreover, the end-user has to use his or her computer to direct his or her printer to print the postage. In addition, the system and method of this patent does not print an original stamp, like one directly purchased from the United States Post Office.

U.S. Patent No. 5,598,477 discloses a system wherein a user's computer receives the conventional ticket information and prints the ticket information with encrypted validating information by the user's printer. In this system, however, the ticket issuer requires user's involvement to send the ticket information to the user's printer. Moreover, the issued ticket is not an original ticket with all special designs and effects of an authentic ticket directly purchased from a Ticket Master. U.S. Patent No. 5,761,648 discloses a method for issuing electronic certificates, such as coupons, to consumers wherein the issuer system sends the electronic certificates to the consumer's computer. The consumer then prints the electronic certificates by his or her local printer. However, the issuer system requires consumer's involvement to send the electronic certificates to the consumer's printer.

### BRIEF SUMMARY OF THE INVENTION

According to one embodiment of the present invention, a program for conducting electronic business transactions includes establishing communication connection between a product/service provider's computer and an end-user's computer, and submitting to the product/service provider's computer a request for a transaction. After the product/service provider's computer receives the request, it processes the transaction and generates an electronic certificate. A direct communication connection is established between the product/service provider's computer and the consumer's printer via a suitable transaction medium, such as the Internet. The electronic certificate data and printing instruction are transmitted to the end-user's printer, which prints the certificate, without the end-user's involvement.

In another embodiment, a remote consumer's printer may be directly controlled by online product/service providers' computers, such that the materials to be printed are downloaded from the product/service providers' computers directly to the printer.

In another embodiment, the product/service provider's computer directly confirms that the consumer's printer has sufficient supplies and replenishes the needed supplies.

According to another embodiment of the present invention, a system for conducting electronic business transactions includes a product/service provider information processing system. The system may receive a request for an original certificate and generate the original certificate. A consumer's printer, which may be in direct communication connection with the product/service provider information processing system, may directly receive the original certificate data and printing instructions to print the certificate without involvement of the consumer. If the consumer's printer is connected directly to the product/service provider's processing system, printing may be accomplished without the involvement of the consumer's computer system.

The present invention is defined by the claims appended hereto, and nothing in this section should be taken as a limitation on those claims.

### BRIEF DESCRIPTION OF SEVERAL VIEWS OF THE DRAWINGS

The present invention is illustrated by way of example and not limitation in the accompanying figures. In the figures, like reference numbers indicate identical or functionally similar elements. Additionally, the left-most digit(s) of a reference number identifies the figure in which the reference number first appears.
Figure 1 is representation of a traditional arrangement for conducting business transactions;
Figure 2 is representation of an arrangement for conducting business transactions according to a preferred embodiment of the present invention;
Figure 3 is representation of a business transaction; and
Figure 4 is representation of a network of end-users and product/service providers according to a preferred embodiment of the present invention.

### DETAILED DESCRIPTION OF THE INVENTION

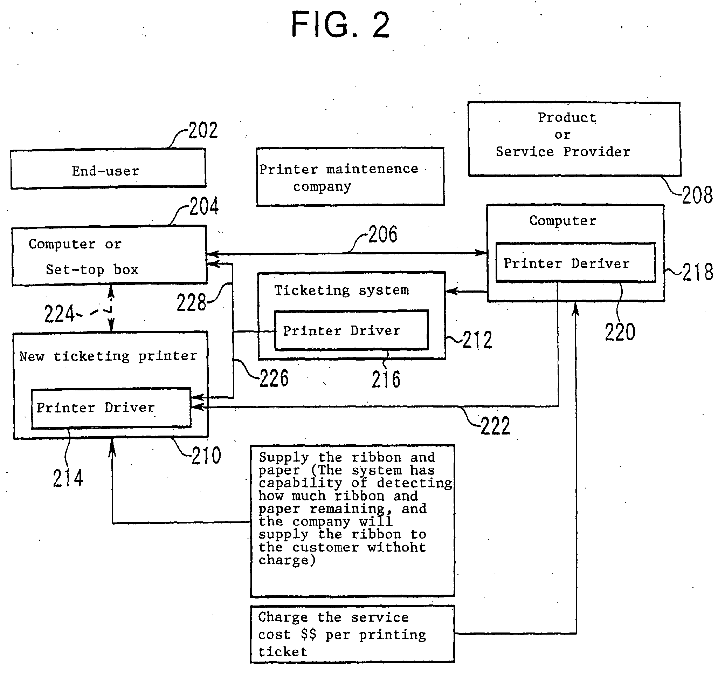

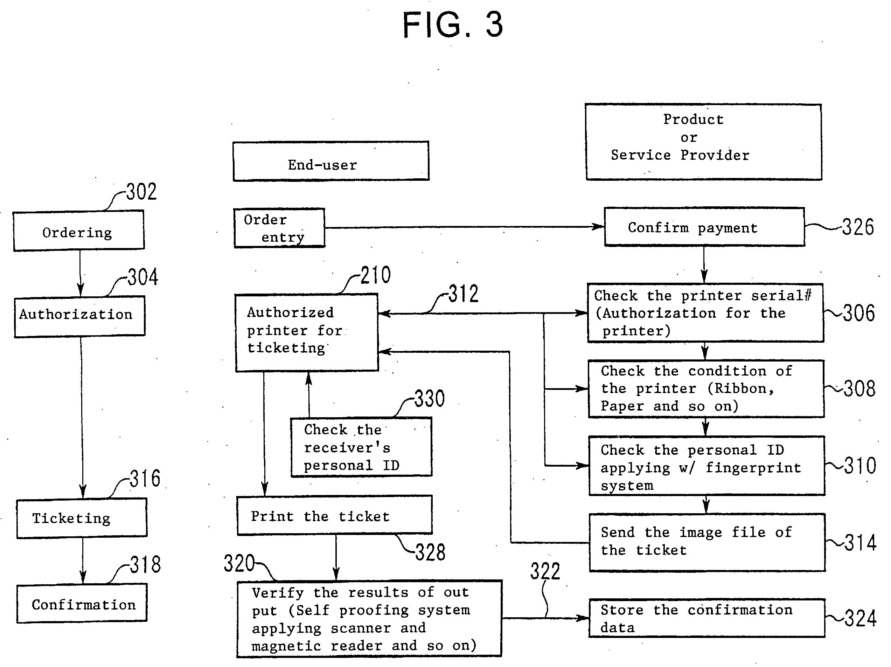

According to the preferred embodiment of the present invention, a system and method for conducting electronic business transactions are disclosed in reference to Figures 2 and 3. Figure 2 shows an arrangement for conducting such method. An end-user 202 using a computer, television, or set-up box 204 may establish communication connection 206, preferably via the Internet, with a product or service provider 208, such as an airline company, and request a transaction, such as purchasing a ticket. It will be recognized by those skilled in the art that the communication connection may be through any suitable transmission medium, such as an electrical, optical, or wireless medium. The service or product provider may be any one of a plurality of providers that provides goods in the form of a printed certificate, such as stamps, or provides printed certificate for services, such as airline tickets. The transactions possible with the present invention, therefore, may include purchasing consumer goods, such as stamps, identification cards, music, film, artwork, logos, labels, overnight postage delivery labels and pickup schedules, tickets for entertainment events, such as games, movies, theater, and for transportation, such as airline, trains, cruise lines, and buses. The transaction may also include a financial transaction, such as purchasing certificates of deposits, stock certificates, and ordering new credit cards, debit card, and/or pre-paid cards. The end-user's request for the transaction may include user's identification information as well as user's printer identification information, such as serial number or the like. In one embodiment, the product/service provider may provide the user with the printer, thus the printer identification information may not be required to be sent to the service provider.

The product/service provider 208 may process the requested transaction and generate an authentic certificate or document, including an original payment receipt, ticket, stamp, and financial certificate, in response to processing the requested transaction. According to one embodiment of the present invention, the provider 208, using the computer system 218, may directly download the issued electronic certificate data and the necessary printing instructions to the user's printer 210, and cause the user's printer 210 to print the certificate without involvement of the end-user 202 and/or his or her computer system 204. In this case, there need not be any communication connection between the user's computer system 204 and the user's printer 210. In other words, for this particular transaction, the product/service provider 208 directly controls the user's printer 210 in the printing of the authentic certificate or document. However, the user's printer 210 may need some communication means to communicate directly with the product/service provider 208. Such communication may be established by any suitable network, such as the Internet.

According to another embodiment, the product/service provider may download the issued electronic certificate data and the printing instructions to the user's printer 210 through the user's computer system 204, so that no additional communication means would be needed in the user's printer 210.

In one embodiment, in downloading the data for issued electronic certificate to the user's printer 210, directly or through the user's computer 204, the provider's computer system 218 may transmit the issued electronic certificate data through an intermediary printer maintenance company 212. The intermediary printer maintenance company 212 may then communicate with the user's printer 210 directly, preferably via the Internet, or through the user's computer 204. When an intermediary printer company is not used, the printer driver 220, residing in the provider's computer system 218, communicates with the printer driver 214 that resides in the user's printer 210, e.g., the path 222, or through user's computer, e.g., the path 206-224, to download and print the issued electronic certificate. When an intermediary printer company is used, the printer driver 220, residing in the provider's computer system 218, may forward the issued electronic certificate data and the printing instructions to the intermediary printer maintenance company 212. The intermediary printer maintenance company 212 may use its printer driver 216 to communicate directly, e.g., the path 226, or through the user's computer 204, e.g. the path 228-224, with the user's printer 210 to download the certificate data and the printing instructions and print the issued electronic certificate.

The provider 208 or the intermediary printer maintenance company 212, if one is utilized, may regularly check the user's printer supplies, and may send more supplies to the end-user 202 for installation in his or her printer 210, preferably free of charge. The user's printer 210 may include one or more indicators, such as light sensors, pressure sensors and the like, to indicate the level of printer supplies, such as paper, ink, and plastic and magnetic strip for printing credit cards, or the like. If the provider 208 utilizes an intermediary printer maintenance company, the cost of replenishing the user's printer with more supplies may be charged to the product/service provider 208, as per printed certificate or on a flat rate.

Figure 3 represents a method of conducting business transactions according to one embodiment of the present invention. In one exemplary embodiment, the method and system of the present invention use the following steps. During the ordering step 302, a product or service provider receives a request for a transaction. Subsequently, the provider acknowledges receipt of the end-user's order and, after processing the requested transaction, provides the end-user with a payment information request. The user provides payment, such as by check, credit card, debit card, bank account number, or other off-line or online techniques. The provider, after receiving the payment information from the user, processes the payment. The product service provider charges the user's credit card, debit card, bank account, or individual account with the provider, and confirms the payment for the purchased service or product, in step 326. The provider may print an original payment receipt on the user's printer 210. The provider then proceeds with the issuing and printing of the purchased certificates, as follows.

During the authorization step 304, the provider may confirm, in confirmation step 306, that the printer 210 is the authorized user's printer to directly receive and print an authorized document. If the provider has provided the printer for the user, the provider has the printer identification information, such as a serial number, stored on file. The provider compares the stored printer identification information with the printer's identification information received directly from the printer. However, if the provider does not have the printer's identification information stored on file, the provider obtains the user's identification information, such as his or her fingerprint information, directly from the user's printer.

Alternatively, the service provider may confirm, in step 310, that the user is authorized to receive the issued certificate, preferably using the user's fingerprint information that may be detected and sent to the provider by the user's printer 210, without the user's involvement, to ensure security. Finally, the provider may also confirm, in step 308, the readiness of the user's printer. This includes checking that the printer has sufficient supplies and is connected to the network or to the user's computer.

The product/service provider, after confirming the authenticity and readiness of the printer 210, sends an activation code 312 to authorize and activate the user's printer 210 for receiving and printing the issued electronic certificate.

The product/service provider then sends, in step 314, an image file of the issued electronic certificate to the user's printer 210. This communication may be direct or via an intermediary printer maintenance company 212, as explained above in connection with Figure 2, preferably over the Internet. As mentioned above the image file may be directly transmitted from the service provider printer driver 220 to the printer deriver 214 inside the user's printer 210 without requiring end-user 202 or his or her computer system 204 involvement. The service provider also sends printing instructions to the printer for printing the image file so that the image file is printed without requiring end user's involvement. This eliminates the possibility of the user altering or forging the authentic materials to be printed. In one embodiment, an end user 202 may provide final authorization for the print job. The image file may preferably include a proprietary certificate identification code or unique member, such as a bar code, for higher security and tracing the printed certificate.

During the printing or ticketing step 316, the user's printer 210, after checking the recipient's identification information in step 330, prints the original electronic certificate, in step 328, preferably without user involvement. The user is not required to issue printing instructions because the service/product provider has issued and sent the necessary printing instructions to the printer. The original certificates or documents printed according to the present embodiments have the special design, effects, and features of certificates or documents purchased directly from the providers. The original certificate may be printed on paper, plastic, fabric or other suitable materials for intended certificate.

In one aspect of the present invention, the end-user may electronically purchase music recording from a music provider, and have it downloaded to the end-user's computer system or directly to the end-user's printer. The end-user or the music vendor may record the purchased music on a medium, such as CD ROM, preferably via a CD burner, or the like. The end-user may also request the music vendor to issue and print an indicia, such as logo, photo, label, and the like, on the music CD, using the end-user's printer. The music vendor may directly control the end-user's printer for receiving and printing the requested indicia on the CD ROM, without the end-user's intervention. In this manner the user generates a music CD that includes a label identical to the label on CD's sold in the normal business channels, such as stores. It will be recognized that other forms of CD's are contemplated by the present invention. For example, a user may download a game and burn the game on a CD via a CD burner. The product provider may then instruct the user's printer to print an authentic label for the CD. The provider may also provide an image file and printing instructions for the user's printer for the cover of the jewel box for the CD.

In one embodiment, the printer may be suitably equipped to print magnetic data on a printed document, such as bank credit card, debit card, or the like. In this arrangement, in addition to the magnetic data the printer may also print images and/or text on the medium. Accordingly, with this capability, the provider may print original credit cards, driver license, or the like, at the end-user's printer. In one embodiment, the user's printer may include means, such as cutters or the like, for printing original documents in their usual and customary dimensions.

During the print confirmation step 318, the certificate identification code is, in step 320, sent back to the service provider for acknowledging and confirming that the certificate data was actually received and the certificate was printed by the user's printer 210. The certificate identification code sent back to the service provider may be maintained, in step 324, by the provider computer system 218 or otherwise stored.

In one embodiment, the method and system provides an implementation wherein a printed certificate or document may also be cancelled using the printing system of the present invention. A user who wishes to cancel for refund a printed certificate issued to him or her, such as a ticket, causes his or her printer to deface the printed document and send an image of the defaced document, using preferably a scanner, to the provider for cancellation and refund. The provider, after receiving an image of the defaced printed document, reads the certificate identification code and cancels the issued certificate, and refunds the user for the purchased price by crediting to the user's credit card or bank account. Alternatively, the printer may read the certificate identification code off of the printed certificate, using preferably a magnetic bar code reader, and send it to the provider for canceling the printed certificate and refunding the user.

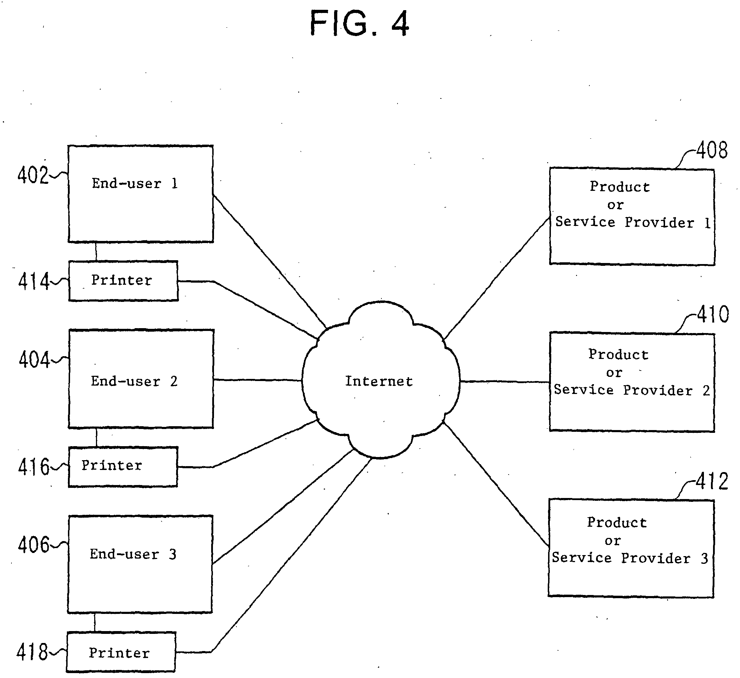

As discussed in the preferred embodiments of the present invention, a product/service provider may directly control a user printer to print original and authorized certificates with high level of security and reliability. Figure 4 shows an exemplary network of end-user stations 402, 404, and 406 in network communication with product/service providers 408, 410, and 412, according to one embodiment of the present invention. With this arrangement, a user can select among one of many product/service providers on a network, such as the Internet and complete a business transaction entirely over the network. The user can search the network to find a service/product provider with the goods or services desired by the user. The user connects to the product/service provider using a local computer, set box, etc. The user then orders an item or service from the product/service provider and pays for the transaction electronically. To complete the transaction, the selected product/service provider sends a file to be printed on the user's printer along with printing instructions. Each one of the product/service providers may thus directly control one or more end-user printers 414, 416, and 418 to receive and print a number of original documents or certificates. As discussed above, the printing data and printing instructions may be downloaded to an end-user's printer without involving the end-user and/or end-user's computer.

It will be appreciated, while preferred embodiments have been shown and described in detail by way of examples, further modifications and embodiments are possible without departing from the scope of the invention as defined by the examples set forth. The principles of this invention may allow conducting electronic commerce, e-commerce; electronic ticketing, e-ticket; and electronic shopping of goods and services in a secure and reliable way. An end-user of the method and system according to the present invention receives purchased documents, certificates, and/or licenses in original, authentic, and official form. It is therefore intended that the invention be defined by the appended claims and all legal equivalents.

## Claims

1. A computer-readable recording medium in which a program for conducting electronic transaction is recorded, the electronic transaction comprising:
(a) establishing a first communication connection to a provider's computer from a consumer's computer;
(b) submitting to the provider's computer a request for a transaction;
(c) processing said transaction, and generating electronic certificate data by the provider's computer;
(d) establishing a second communication connection from said provider's computer to said consumer's printer;
(e) transmitting said electronic certificate data from said provider's computer to said consumer's printer; and
(f) controlling the printing of an electronic certificate by the provider's computer to print the certificate on said consumer's printer.

2. The computer-readable recording medium of claim 1, wherein said transmitting step includes transmitting said electronic certificate data to said consumer's printer without involvement of said consumer.

3. The computer-readable recording medium of claim 1, wherein said submitting step includes:
(g) submitting consumer identification information for said consumer's computer; and
(h) submitting printer identification information for said consumer's printer.

4. The computer-readable recording medium of claim 1, wherein said processing step includes:
(g) confirming said consumer identification information; and
(h) confirming said printer identification information.

5. The computer-readable recording medium of claim 1, wherein said establishing the second communication connection includes:
(g) confirming that said printer has sufficient supplies; and
(h) replenishing said printer with supplies.

6. The computer-readable recording medium of claim 1, further including:
(g) providing an identification indicia for printing on said electronic certificate;
(h) transmitting said identification indicia along with said image file to said consumer's printer; and
(i) printing said identification indicia on said electronic certificate.

7. The computer-readable recording medium of claim 6, further including:
(j) confirming that said identification indicia was printed on said electronic certificate; and
(k) maintaining print-confirmation information for said electronic certificate by said provider's computer.

8. The computer-readable recording medium of claim 1, further including:
(j) providing printing instructions for printing said electronic certificate;
(k) transmitting said printing instructions along with said image file to said consumer's printer; and
(I) printing said electronic certificate using said printing instructions.

9. The computer-readable recording medium of claim 7, wherein said identification indicia is a bar code.

10. The computer-readable recording medium of claim 1, wherein said printing step includes:
(g) printing an original financial certificate.

11. The computer-readable recording medium of claim 1, wherein said printing step includes:
(g) printing an original ticket.

12. The computer-readable recording medium of claim 1, wherein said printing step includes:
(g) printing an original stamp

13. The computer-readable recording medium of claim 1, wherein said printing step includes:
(g) printing an original postage label and an associated pickup schedule label.

14. The computer-readable recording medium of claim 1, wherein said printing step includes:
(g) printing an original credit card that is activated for immediate use.

15. The computer-readable recording medium of claim 1 further including:
(g) requesting said consumer's computer to make a payment for said electronic transaction; and
(h) confirming said payment.

16. The computer-readable recording medium of claim 15, wherein said printing step includes:
(i) printing an original receipt for said payment.

17. The computer-readable recording medium of claim 1, wherein said printing step includes:
(g) printing an original debit card that is activated for immediate use.

18. The computer-readable recording medium of claim 1, wherein said printing step includes:
(g) printing an original pre-paid card that is activated for immediate use.

19. A computer-readable recording medium in which a program is recorded, the program comprising:
(a) requesting a transaction from a provider's computer;
(b) transmitting authorized document data to a consumer's printer that is under direct control of said provider's computer in response to said transaction; and
(c) printing said authorized document with said consumer's printer.

20. The computer-readable recording medium of claim 19, wherein said transmitting step includes:
(d) transmitting said authorized document data to said consumer's printer without involvement of said consumer.

21. The computer-readable recording medium of claim 20, further including:
(e) directly confirming that said consumer's printer has sufficient supplies to print said authorized document; and
(f) automatically replenishing said consumer's printer with supplies.

22. A system for issuing and printing authentic certificates for a consumer, comprising:
(a) a provider information processing system that receives request for an authentic certificate and generates said authentic certificate, said processing system providing printing instructions for printing said authentic certification;
(b) a network connecting said processing system to a plurality of user's; and
(c) a printer connected to a point on said network in communication with said provider information processing system, such that said consumer's printer receives authentic certificate data and printing instructions from said provider information processing system and prints the authentic certificate according to said printing instructions.

23. The system of claim 22, wherein said communication connection is via the Internet.

24. The system of claim 22, wherein said communication connection is via optical communication medium.

25. The system of claim 22, wherein said communication connection is via wireless communication medium.

26. The system of claim 22, wherein said provider information processing system includes means for:
(c) directly confirming that said consumer's printer has sufficient supplies to print said authentic certificate; and
(d) replenishing said consumer's printer with supplies.

27. The system of claim 22, wherein said consumer's printer includes means for sending print-confirmation information to said provider.

28. The system of claim 22, wherein said consumer printer is capable of printing authentic certificates of different dimensions.

29. A printing device associated with a consumer, comprising:
(a) means for receiving printing data and printing instructions from a remote provider; and
(b) means for printing said printing data according to said printing instructions under said remote provider's direct control without involvement of said consumer.

30. The printing device of claim 29, further including:
(c) means for acknowledging receipt of said printing data directly to said remote provider.

31. The printing device of claim 29, further including:
(d) means for canceling a printed material; and
(e) means for sending information about cancellation of said printed material to said remote provider.

32. The printing device of claim 29, wherein said printing data is printed on paper.

33. The printing device of claim 29, wherein said printing data is printed on plastic.

34. The printing device of claim 29, wherein said printing data is printed on CD ROM.

35. The printing device of claim 31, wherein said canceling include:
(f) defacing said printed material; and
(g) sending an image of said printed material in defaced form to said remote provider.

36. The printing device of claim 31, wherein said canceling include sending identification information read from said printed material to said remote provider.

37. The printing device of claim 29, wherein said means for printing includes means for printing original financial certificates.

38. The printing device of claim 29, wherein said printing includes printing original tickets.

39. The printing device of claim 29, wherein said printing includes printing original stamps.

40. The printing device of claim 29, wherein said printing includes printing original payment receipts.

41. A method for checking that a user's printer has sufficient printer supplies by a remote provider, said method comprising:
(a) establishing communication with said user's printer by said remote provider;
(b) receiving information about said printer supplies; and
(c) determining sufficiency of said printer supplies.

42. The method of claim 41, wherein said establishing communication includes establishing communication without a user's involvement.

43. The method of claim 41, wherein said establishing communication includes establishing communication without a user's computer involvement.

44. The method of claim 41 further includes sending printer supplies for said user's printer.

45. A method for printing original documents at a user location, the method comprising:
(a) establishing communication from a first processor associated with an authorizer of printing of an original document to a user printer at the user location;
(b) printing the original document with the user printer; and
(c) controlling (b) independent of a printer driver on a computer at the user location.

46. The method of claim 45 wherein said user location is one of a plurality of user locations.

47. The method of claim 45 wherein said authorizer is one of a plurality of authorizers.

48. The method of claim 45 wherein said communication is via the Internet.

49. A method for printing original documents at a user location, the method comprising:
(a) printing an original document with a printer responsive to a printer resident driver; and
(b) authorizing (a) with a driver resident on a processor geographically remote from the printer.

50. The method of claim 49 wherein said printer is one of a plurality of printers.

51. The method of claim 49 wherein said processor is one of a plurality of processors.

52. The method of claim 49 wherein said authorizing is via the Internet.

53. A method for printing original documents at a user location, the method comprising:
(a) transmitting first data for a first original document to a printer via a computer network;
(b) printing the first original document responsive to the first data with a printer;
(c) transmitting second data for a second original document to the printer via the computer network, the second original document being a different type of document than the first original document; and
(d) printing the second original document responsive to the second data with the printer.

54. The method of claim 53, wherein said transmitting steps include transmitting said first and second electronic certificate data to said printer without involvement of said user.

55. The method of claim 53, wherein said transmitting steps include transmitting said first and second electronic certificate data to said printer without involvement of a user's computer.

56. The method of claim 53, wherein said printing step includes:
(e) printing an original financial certificate.

57. The method of claim 53, wherein said printing step includes:
(e) printing an original ticket.

58. The method of claim 53, wherein said printing step includes:
(e) producing an original stamp.

59. The method of claim 53, wherein said printing step includes:
(e) printing an original postage label and an associated pickup schedule label.

60. The method of claim 53, wherein said printing step includes:
(e) printing an original credit card that is activated for immediate use.

61. The method of claim 53 further including:
(e) requesting said user to make a payment for said electronic transaction; and
(f) confirming said payment.

62. The method of claim 61, wherein said printing step includes:
(g) printing an original receipt for said payment.

63. The method of claim 53, wherein said printing step includes:
(e) printing an original debit card that is activated for immediate use.

64. The method of claim 53, wherein said printing step includes:
(e) printing an original pre-paid card that is activated for immediate use.

65. The method of claim 53, wherein said transmitting steps include transmitting said first and second electronic certificate data to an intermediary party.

66. The method of claim 65, wherein said intermediary party is an intermediary printer maintenance organization.

67. A computer program product for conducting electronic transactions, comprising:means for establishing a first communication connection to a provider's computer from a consumer's computer; means for submitting to the provider's computer a request for a transaction; means for processing said transaction, and generating electronic certificate data by the provider's computer; means for establishing a second communication connection from said provider's computer to said consumer's printer; means for transmitting said electronic certificate data from said provider's computer to said consumer's printer; and means for controlling the printing of an electronic certificate by the provider's computer to print the certificate on said consumer's printer.
